# EUROPÄISCHE PATENTSCHRIFT

(11) **EP 1 124 085 B1**
(45) Veröffentlichungstag und Bekanntmachung des Hinweises auf die Patenterteilung: **04.09.2002**
(21) Anmeldenummer: 00400373.7
(22) Anmeldetag: 09.02.2000
(51) Int. Cl.: F16L 59/06

(54) **Flexibles Leitungsrohr**
Flexible conduit
Conduite flexible

(43) Veröffentlichungstag der Anmeldung: 16.08.2001
(73) Patentinhaber: Nexans, 75008 Paris (FR)
(72) Erfinder: Schippl, Klaus, Dipl.-Ing., 30659 Hannover (DE)
(74) Vertreter: Döring, Roger, Dipl.-Ing.

(56) Entgegenhaltungen:
- EP-A- 0 952 382
- DE-A- 2 161 839
- US-A- 4 492 089
- US-A- 4 984 605

## Beschreibung

Gegenstand der vorliegenden Erfindung ist ein flexibles Leitungsrohr für den Transport erwärmter oder gekühlter Medien nach dem Oberbegriff des Anspruchs 1.

Aus der US-A-4 984 605 ist ein Leitungsrohr für tiefkalte Medien bekannt, welches aus zwei konzentrischen gewellten Metallrohren besteht, zwischen denen eine Isolierschicht vorgesehen ist. Auf dem Innenrohr liegt ein wendelförmig aufgebrachter Abstandshalter, auf den eine sogenannte Superisolierungsschicht derart aufgewickelt ist, daß zwischen der Superisolierungsschicht und dem Innenrohr ein Ringspalt verbleibt. Unter einer Superisolierung wird in Fachkreisen ein Gebilde verstanden, welches aus wechselweise aufgebrachten Lagen von Metallfolien und Folien aus einem Vlies besteht. Der Ringspalt dient dazu, den Evakuierungsprozeß insbesondere bei großen Rohrlängen zu beschleunigen. Das bekannte Leitungsrohr findet Anwendung für den Transport von flüssigem Stickstoff, Helium und Sauerstoff. Es ist sehr kostenträchtig in der Herstellung, da sowohl das Aufbringen der Folien als auch der Evakuierungsprozeß trotz der vorgenommenen Maßnahmen recht zeitaufwendig ist. Aus diesem Grunde hat sich das bekannte Leitungsrohr nur dort durchsetzen können, wo es auf eine exzellente Isolierung ankommt und somit ein minimaler Wärmeeinfall zu erwarten ist.

Aus der DE-A-198 18 167 ist ein flexibles Leitungsrohr bekannt, welches aus einem inneren gewellten Metallrohr, einem im Abstand zum inneren Metallrohr angeordneten äußeren gewellten Metallrohr und einer Abstandshalterung sowie einem Isoliermaterial zwischen dem inneren und dem äußeren Metallrohr besteht. Der Druck im Ringspalt liegt unterhalb des Atmosphärendrucks. Bei diesem Rohr besteht die Abstandshalterung aus zwei mit gegenläufiger Wickelrichtung auf das Innenrohr aufgebrachten Strängen aus faserverstärktem Kunststoff. Das Isoliermaterial ist ein Vliesmaterial und der Druck im Ringspalt beträgt zwischen 10⁻³ und 10⁻¹ m bar. Dieses bekannte Leitungsrohr wird eingesetzt für das Umpumpen von tiefkaltem, verflüssigten Gas von einem Förderschiff auf ein Transportschiff. Das Leitungsrohr ist bei einer Temperatur von -160 °C flexibel und die Isolierung ist für diesen Anwendungsfall ausreichend, um einen größeren Wärmeeintrag zu verhindern, da auch die Länge der Leitungsrohre relativ klein ist.

Ausgehend von diesem Stand der Technik liegt der vorliegenden Erfindung die Aufgabe zugrunde, ein isoliertes Leitungsrohr bereitzustellen, welches kostengünstig herstellbar ist und einen hohen thermischen Isolierungswert aufweist. Darüber hinaus soll die Abstandshalterung eine hohe Tragfähigkeit aufweisen, so daß ein gleicher Abstand zwischen Innenrohr und Außenrohr gewahrt bleibt. Die Flexibilität des Leitungsrohres soll durch die Abstandshalterung und die reflektierenden Folien nicht oder nur unwesentlich eingeschränkt werden.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

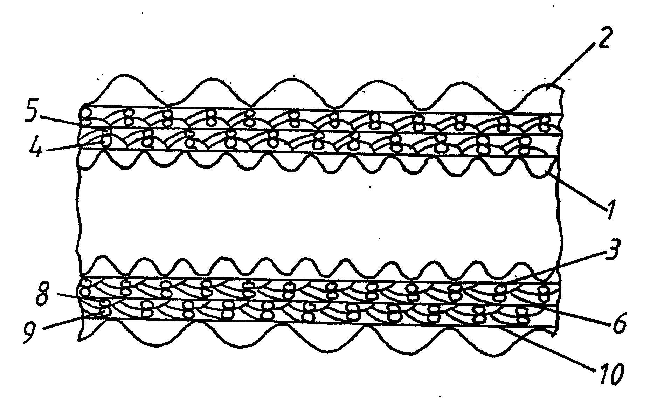

Die Erfindung ist anhand des in der Figur schematisch dargestellten Ausführungsbeispiels näher erläutert.

Das Leitungsrohr besteht aus einem metallischen gewellten Innenrohr 1 vorzugsweise aus nichtrostendem Stahl sowie einem koaxial zum Innenrohr 1 angeordneten metallischen gewellten Außenrohr 2, vorzugsweise ebenfalls aus nichtrostendem Stahl.

Als Abstandshalterung sowie gleichzeitig Isolierungsschicht dienen einzelne Stränge aus glasfaserverstärktem Polyester, Vliesfolien sowie mit Aluminium bedampfte Polyesterfolien.

Auf dem Innenrohr 1 ist als erste Lage eine Bewicklung 3 aus einem Glasvlies und einer mit Aluminium bedampften Polyesterfolie angeordnet. Auf die Bewicklung 3 ist eine erste Lage 4 aus Strängen aus Glasfaserverstärktem Polyester aufgewickelt. Die Schlaglänge der Stränge der ersten Lage 4 ist etwa gleich dem Außendurchmesser des Innenrohres 1. Es sind mehrere Stränge im Abstand zueinander und nebeneinander mit gleicher Schlaglänge aufgewickelt.

Über diese erste Lage 4 ist eine zweite Lage 5 aus Strängen aus glasfaserverstärktern Polyester mit gleicher Schlaglänge und gleicher Anzahl jedoch mit entgegengesetzter Wickelrichtung wie die Stränge der ersten Lage 4 aufgewickelt.

Dann folgt wieder eine Bewicklung 6 aus einem Glasvlies und einer mit Aluminium bedampften Polyesterfolie. Zumindest die Polyesterfolie ist wendelförmig mit überlappenden Bandkanten aufgelegt.

Auf der Bewicklung 6 liegen dritte und vierte Lagen 8 und 9, die wie die Lagen 4 und 5 aufgebracht sind.

Auf die Lage 9 ist wiederum zunächst eine Bewicklung 10 aus einem Glasvlies und einer mit Aluminium bedampften Polyesterfolie aufgewickelt.

Auf der äußersten Bewicklung 10 liegt das Außenrohr 2 mit seinen Wellentälern auf.

Sowohl das Innenrohr 1 als auch das Außenrohr 2 sind in einer kontinuierlichen Arbeitsweise durch Formen eines Metallbandes zum Rohr, Verschweißen der Längskanten und Wellen hergestellt. Die einzelnen Lagen und Bewicklungen werden auf das Innenrohr bzw. auf die jeweils untere Lage bzw. Bewicklung aufgebracht und abschließend das Wellrohr um das innere Gebilde herumgeformt. Auf das Außenrohr 2 kann noch ein nicht dargestellter Außenmantel aus Kunststoff extrudiert werden.

Durch die aus Strängen mit entgegengesetzter Wickelrichtung aufgebrachter Abstandshalterung ergeben sich extrem niedrige Verluste durch Wärmeleitung, da zwischen den Strängen nur eine punktweise Berührung auftrifft.

Die auf der Polyesterfolie aufgedampfte Aluminiumschicht reflektiert die Wärmeeinstrahlung und minimiert dadurch die Verluste durch Wärmestrahlung.

Das Glasvlies hat die Aufgabe, den Ringspalt zwischen dem Innenrohr 1 und dem Außenrohr 2 mehr oder weniger auszufüllen und somit Verluste aufgrund von Konvention. Darüber hinaus dient das Glasvlies als Polsterung.

Die einzelnen Stränge aus glasfaserverstärktem Polyester bilden den Großteil der Isolierungsschicht und sind in einer solchen Anzahl und in einem solchen Abstand zueinander vorzusehen, daß sich ein tragfähiges Gerüst für das Innenrohr 1 im Außenrohr 2 bildet.

Ein Leitungsrohr gemäß der Lehre der Erfindung sowie die Aufbauelemente haben beispielsweise folgende Abmessung:

| | | |
|---|---|---|
| Innenrohr: | Innendurchmesser: | 265 mm |
| | Außendurchmesser: | 296 mm |
| | Wellsteigung: | 30 mm |
| Außenrohr: | Innendurchmesser: | 315 mm |
| | Außendurchmesser: | 345 mm |
| | Wellsteigung: | 30 mm |
| Strang aus glasfaserverstärktem: | | |
| Polyester: | Außendurchmeser: | 2 mm |
| | Schlaglänge: | 250 mm |
| | Anzahl der Stränge pro Lage: | 5 |
| Glasvlies: | Breite: | 120 mm |
| | Wanddicke: | 0,2 mm |
| | Schlaglänge: | 100 mm |
| Aluminiumbedampfte | | |
| Polyesterfolie: | Breite: | 100 mm |
| | Wanddicke: | 0,1 mm |
| | Schlaglänge: | 100 mm |

Wird ein höherer Isolationswert gewünscht, kann eine Bewicklung aus einem Glasvlies und einer mit Aluminium bedampften Polyesterfolie zwischen den einzelnen mit gegenläufiger Schlagrichtung gewickelten Strängen 4 und 5 sowie 8 und 9 vorgesehen sein.

## Patentansprüche

1. Flexibles Leitungsrohr, bestehend aus einem inneren gewellten Metallrohr (1), einem im Abstand zum inneren Rohr (1) angeordneten äußeren gewellten Metallrohr (2) und einer auf dem Innenrohr (1) aufliegenden Abstandshalterung aus zwei mit gegenläufiger Wickelrichtung bestehenden Strängen aus faserverstärktem Kunststoff sowie einem Isoliermaterial und einem Druck im Ringspalt zwischen den Rohren (1,2), der unterhalb des Atmosphärendrucks liegt, **gekennzeichnet durch** folgende Merkmale:
- über einer ersten Abstandshalterung aus zwei jeweils mit gegenläufiger Wickelvorrichtung aufgebrachten Strängen (4,5) ist mindestens eine zweite Abstandshalterung aus zwei mit gegenläufiger Wickelrichtung aufgebrachten Strängen (8,9) angeordnet,
- zwischen der ersten und der zweiten Abstandshalterung ist mindestens eine erste Bewicklung (6) aus metallbedampfter Kunststoffolie angeordnet.

2. Flexibles Leitungsrohr nach Anspruch 1, **dadurch gekennzeichnet, daß** über der zweiten Abstandshalterung eine zweite Bewicklung (10) aus metallbedampfter Kunststoffolie angeordnet ist.

3. Flexibles Leitungsrohr nach Anspruch 1 oder 2, **dadurch gekennzeichnet, daß** die metallbedampfte Kunststoffolie eine mit Aluminium bedampfte Polyesterfolie ist.

4. Flexibles Leitungsrohr nach Anspruch 1 oder einem der folgenden, **dadurch gekennzeichnet, daß** unterhalb jeder Bewicklung (6,10) ein Vlies angeordnet ist.

5. Flexibles Leitungsrohr nach Anspruch 1 oder einem der folgenden, **dadurch gekennzeichnet, daß** zwischen den einzelnen Strängen (4,5) der ersten Abstandshalterung und den einzelnen Strängen (8,9) der zweiten Abstandshalterung jeweils ein Vlies sowie eine mit Aluminium bedampfte Polyesterfolie angeordnet ist.

6. Flexibles Leitungsrohr nach Anspruch 1 oder einem der folgenden, **dadurch gekennzeichnet, daß** der Außendurchmesser der Stränge weniger als 3,5 mm beträgt.

7. Flexibles Leitungsrohr nach Anspruch 1 oder einem der folgenden, **dadurch gekennzeichnet, daß** zwischen dem Innenrohr (1) und der ersten Abstandshalterung (4,5) ein Vlies (3) angeordnet ist.

8. Flexibles Leitungsrohr nach Anspruch 4 oder einem der folgenden, **dadurch gekennzeichnet, daß** das auf dem Innenrohr aufliegende und zwischen der ersten und der zweiten Abstandshalterung befindliche Vlies ein Glasvlies ist.

9. Flexibles Leitungsrohr nach Anspruch 1 oder einem der folgenden, **dadurch gekennzeichnet, daß** die metallbedampfte Kunststoffolie um die Abstandshalterungen mit überlappenden Bandkanten herumgewickelt ist.

10. Flexibles Leitungsrohr nach Anspruch 1 oder einem der folgenden, **dadurch gekennzeichnet, daß** die Schlaglänge der einzelnen Stränge gleich oder größer ist als der Durchmesser des Innenrohres (1).

11. Flexibles Leitungsrohr nach Anspruch 1 oder einem der folgenden, **dadurch gekennzeichnet, daß** mehrere Stränge in einer Ebene gewickelt sind.

12. Flexibles Leitungsrohr nach Anspruch 11, **dadurch gekennzeichnet, daß** der Abstand zwischen zwei benachbarten Strängen weniger als 10 cm beträgt.

13. Flexibles Leitungsrohr nach Anspruch 4 oder einem der folgenden, **dadurch gekennzeichnet, daß** das Vlies wendelartig aufgewickelt ist.

14. Flexibles Leitungsrohr nach Anspruch 1 oder einem der folgenden, **dadurch gekennzeichnet, daß** der Druck im Ringspalt weniger als 10⁻¹ mbar beträgt

## Claims

1. Flexible conduit pipe consisting of an inner corrugated metal pipe (1), an external corrugated metal pipe (2) arranged at a distance to the internal pipe (1), a spacer mounted onto the inner pipe (1) consisting of two strands with opposing winding direction from fibreglass reinforced plastic, an insulating material and a pressure in the annular gap between the pipes (1, 2) below atmospheric pressure, **characterised in that**:
- arranged above a first spacer from two strands (4, 5) mounted with an opposing winding device is at least one second spacer from two strands (8, 9) mounted in an opposing winding direction,
- arranged between the first and second spacer is at least a first winding (6) from metal-coated plastic film.

2. Flexible conduit pipe in accordance with Claim 1, **characterised in that** arranged over the second spacer is a second winding (10) from metal-coated plastic film.

3. Flexible conduit pipe in accordance with Claim 1 or 2, **characterised in that** the metal-coated plastic film is aluminised polyester film.

4. Flexible conduit pipe in accordance with Claim 1 or one of the following claims, **characterised in that** a fabric matting is arranged below each winding (6, 10).

5. Flexible conduit pipe in accordance with Claim 1 or one of the following claims, **characterised in that** arranged between the individual strands (4, 5) of the first spacer and the individual strands (8. 9) of the second spacer is fabric matting and an aluminised polyester film.

6. Flexible conduit pipe in accordance with Claim 1 or one of the following claims, **characterised in that** the external diameter of the strands measures less than 3.5 mm.

7. Flexible conduit pipe in accordance with Claim 1 or one of the following claims, **characterised in that** arranged between the inner pipe (1) and the first spacer (4, 5) is a fabric matting (3).

8. Flexible conduit pipe in accordance with Claim 4 or one of the following claims, **characterised in that** the fabric matting lying on the inner pipe and between the first and second spacers is a fibreglass matting.

9. Flexible conduit pipe in accordance with Claim 1 or one of the following claims, **characterised in that** the metal-coated plastic film around the spacers is wound around with overlapping band edges.

10. Flexible conduit pipe in accordance with Claim 1 or one of the following claims, **characterised in that** the length of twist of the individual strands is equal to or greater than the diameter of the inner pipe (1).

11. Flexible conduit pipe in accordance with Claim 1 or one of the following claims, **characterised in that** several strands are wound in one level.

12. Flexible conduit pipe in accordance with Claim 11, **characterised in that** the distance between two adjacent strands measures less than 10 cm.

13. Flexible conduit pipe in accordance with Claim 4 or one of the following claims, **characterised in that** the fabric matting is wound like a spiral.

14. Flexible conduit pipe in accordance with Claim 1 or one of the following claims, **characterised in that** the pressure in the annular gap is less than 10⁻¹ mbar.

## Revendications

1. Tuyau flexible composé d'un tuyau métallique ondulé intérieur (1), d'un tuyau métallique ondulé extérieur (2) disposé à une certaine distance du tuyau intérieur (1) et d'un écarteur disposé sur le tuyau intérieur (1), composé de deux mèches à sens d'enroulement opposé en plastique renforcé de fibres de verre ainsi que d'un matériau isolant et d'une pression dans l'interstice annulaire entre les tuyaux (1, 2) inférieure à la pression atmosphérique, **caractérisé** comme suit :
- par-dessus un premier écarteur composé de deux mèches à sens d'enroulement opposé, il est prévu au moins un deuxième écarteur composé de deux mèches (8, 9) appliquées dans le sens d'enroulement opposé.
- entre le premier et le deuxième écarteur, il est prévu au moins un premier enroulement (6) composé d'un film plastique métallisé.

2. Tuyau flexible suivant la revendication 1, **caractérisé par le fait qu**'un deuxième enroulement (10) composé d'un film plastique métallisé est disposé sur le deuxième écarteur.

3. Tuyau flexible suivant la revendication 1 ou 2, **caractérisé par le fait que** le film plastique métallisé est un film polyester métallisé à l'aluminium.

4. Tuyau flexible suivant la revendication 1 ou l'une des suivantes, **caractérisé par le fait qu**'un non-tissé est disposé sous chaque enroulement (6, 10).

5. Tuyau flexible suivant la revendication 1 ou l'une des suivantes, **caractérisé par le fait qu**'un non-tissé ainsi qu'un film polyester métallisé à l'aluminium est disposé entre les mèches (4, 5) du premier écarteur et entre les mèches (8, 9) du deuxième écarteur.

6. Tuyau flexible suivant la revendication 1 ou l'une des suivantes, **caractérisé par le fait que** le diamètre extérieur des mèches est inférieur à 3,5 mm.

7. Tuyau flexible suivant la revendication 1 ou l'une des suivantes, **caractérisé par le fait qu'**un non-tissé (3) est disposé entre le tuyau intérieur (1) et le premier écarteur (4, 5).

8. Tuyau flexible suivant la revendication 4 ou l'une des suivantes, **caractérisé par le fait que** le non-tissé disposé sur le tuyau intérieur et entre le premier et le deuxième écarteur est un non-tissé en fibres de verre.

9. Tuyau flexible suivant la revendication 1 ou l'une des suivantes, **caractérisé par le fait que** le film plastique métallisé est enroulé autour des écarteurs avec ses bords superposés.

10. Tuyau flexible suivant la revendication 1 ou l'une des suivantes, **caractérisé par le fait que** le pas de toronnage des différentes mèches est supérieur ou égal au diamètre du tuyau intérieur (1).

11. Tuyau flexible suivant la revendication 1 ou l'une des suivantes, **caractérisé par le fait que** plusieurs mèches sont enroulées dans un même plan.

12. Tuyau flexible suivant la revendication 11, **caractérisé par le fait que** la distance entre deux mèches voisines est inférieure à 10 cm.

13. Tuyau flexible suivant la revendication 4 ou l'une des suivantes, **caractérisé par le fait que** le non-tissé est enroulé en hélice.

14. Tuyau flexible suivant la revendication 1 ou l'une des suivantes, **caractérisé par le fait que** la pression dans l'interstice annulaire est inférieure à 10⁻¹ mbar.
